# DEMANDE DE BREVET EUROPEEN

(11) **EP 2 068 212 A1**
(43) Date de publication de la demande: **10.06.2009**
(21) Numéro de dépôt: 07122513.0
(22) Date de dépôt: 06.12.2007
(51) Int. Cl.: G04G 1/10, G06F 3/042

(54) **Objet portable tel qu'une pièce d'horlogerie comprenant des moyens d'enclenchement d'une fonction de commande électronique**

(71) Demandeur: The Swatch Group Research and Development Ltd., 2074 Marin (CH)
(72) Inventeur: Tortora, Pierpasquale, 2000, Neuchâtel (CH)
(74) Mandataire: Ravenel, Thierry Gérard Louis

(57) **Abrégé**

Objet portable tel qu'une pièce d'horlogerie comprenant un cadran (4) recouvert par une glace de montre (2), cet objet portable renfermant un circuit électronique (16) de commande d'au moins une fonction horlogère ou d'une fonction non liée au temps, l'objet portable étant **caractérisé en ce qu'**il comprend en outre au moins une source lumineuse (12) et un détecteur de lumière associé (10) qui sont disposés au niveau du cadran (4), la source lumineuse (12) émettant à travers la glace (2) un faisceau de lumière qui est, au moins partiellement, réfléchi vers le détecteur de lumière (10) lorsqu'il est intercepté par un doigt (D) de l'utilisateur posé sur la glace (2) de l'objet portable, le détecteur de lumière (10) fournissant au circuit électronique de commande (16) un signal électrique pour l'activation de la fonction correspondante lorsqu'il détecte la lumière produite par la source lumineuse (12) et réfléchie par le doigt (D) de l'utilisateur.

## Description

La présente invention concerne un dispositif d'enclenchement d'une fonction par application d'un doigt sur la glace d'un objet portable tel qu'une pièce d'horlogerie. Plus précisément, la présente invention concerne un tel dispositif d'enclenchement utilisant des moyens optiques.

On connaît déjà des montres-bracelets dont la glace est munie de touches tactiles pour l'enclenchement électronique d'une fonction horaire ou d'une fonction non liée au temps. Ces touches tactiles sont structurées par des techniques d'évaporation de matériaux conducteurs transparents sur la surface intérieure de la glace qui est en regard du cadran de la montre. Ces touches sont par exemple du type capacitif. Autrement dit, lorsque l'utilisateur applique son doigt sur la glace de la montre, il y a variation de la capacité du condensateur formé entre le doigt et la glace, ce qui est interprété par l'électronique de la montre comme un signal de commande de la fonction associée à la touche tactile activée.

Les techniques de structuration de touches tactiles transparentes sur une glace de montre sont maintenant bien maîtrisées. Elles restent néanmoins longues à mettre en oeuvre et donc coûteuses. Un autre inconvénient des touches tactiles brièvement décrites ci-dessus réside dans le fait qu'elles ne peuvent être activées lorsque la montre se trouve dans l'eau.

La présente invention a pour but de remédier aux problèmes susmentionnés ainsi qu'à d'autres encore en proposant un nouveau type de dispositif d'enclenchement d'une fonction électronique dans un objet portable tel qu'une montre-bracelet qui soit notamment plus simple à installer et donc moins coûteux.

A cet effet, la présente invention concerne un objet portable tel qu'une pièce d'horlogerie comprenant une boîte de montre délimitée d'un côté par un cadran recouvert par une glace de montre, cette boîte renfermant un circuit électronique de commande d'au moins une fonction horlogère ou d'une fonction non liée au temps, l'objet portable étant caractérisé en ce qu'il comprend en outre au moins une source lumineuse et un détecteur de lumière associé qui sont disposés au niveau du cadran, la source lumineuse émettant à travers la glace un faisceau de lumière qui est, au moins partiellement, réfléchi vers le détecteur de lumière lorsqu'il est intercepté par le doigt de l'utilisateur posé sur la glace dudit objet portable, le détecteur de lumière fournissant au circuit électronique de commande un signal électrique pour l'activation de la fonction correspondante lorsqu'il détecte la lumière produite par la source lumineuse et réfléchie par le doigt de l'utilisateur.

Grâce à ces caractéristiques, la présente invention procure un objet portable tel qu'une pièce d'horlogerie dont les moyens de commande d'une fonction horaire ou de toute autre fonction non liée au temps comprennent uniquement une source lumineuse et un détecteur de lumière qui sont des composants bon marché et qui sont simples à installer dans une montre, ce qui permet de réaliser des gains substantiels en termes de coût de production. Par ailleurs, de tels moyens de commande d'une fonction électronique peuvent être utilisés en toutes circonstances, en particulier lorsque la pièce d'horlogerie se trouve dans l'eau.

Selon une caractéristique complémentaire de l'invention, l'objet portable comprend des moyens d'enclenchement que l'utilisateur doit activer pour que la source lumineuse émette de la lumière. La source lumineuse n'émet donc de la lumière que lorsqu'elle a été préalablement activée par l'utilisateur. On évite ainsi de devoir laisser la source lumineuse constamment allumée, ce qui permet de réaliser des économies d'énergie particulièrement importantes dans le cas d'une montre ou d'un téléphone portable dont les réserves en énergie sont limitées, et de ne pas risquer d'enclencher une fonction par inadvertance.

Selon une autre caractéristique de l'invention, l'objet portable comprend autant de paires source lumineuse/détecteur de lumière qu'il y a de fonctions à commander dans l'objet portable.

Selon encore une autre caractéristique de l'invention, dans le cas où l'objet portable est une pièce d'horlogerie, celle-ci comprend une aiguille des heures et une aiguille des minutes qui se déplacent au-dessus du cadran et qui se mettent dans une position telle qu'elles ne recouvrent pas la ou les paires source lumineuse/détecteur de lumière lorsque la source lumineuse est activée.

Selon encore une autre caractéristique de l'invention, la source lumineuse est une microcavité laser verticale, mieux connue sous son acronyme anglo-saxon VCSEL, qui émet de la lumière collimatée. La puissance lumineuse produite par la source laser est typiquement inférieure ou égale à 1 mW pour ne pas représenter de danger pour la vue de l'utilisateur. On pourra avantageusement utiliser les sources laser produites par la société Avalon Photonics Ltd.

Selon encore une autre caractéristique de l'invention, le détecteur de lumière est une photodiode. La photodiode et la source laser sont montées côte-à-côte sur le cadran de l'objet portable. Selon une variante, la photodiode et la source de lumière sont montées côte-à-côte sur un même circuit imprimé, lui-même fixé sur le cadran ou intégré dans celui-ci.

D'autres caractéristiques et avantages de la présente invention ressortiront plus clairement de la description détaillée qui suit d'un mode de réalisation de l'objet portable selon l'invention, cet exemple étant donné à titre purement illustratif et non limitatif seulement en liaison avec le dessin annexé sur lequel :
- la figure 1 est une vue de dessus d'une pièce d'horlogerie selon l'invention, et
- la figure 2 est une représentation schématique des moyens de commande d'une fonction électronique d'une pièce d'horlogerie selon l'invention.

La présente invention procède de l'idée générale inventive qui consiste à remplacer par exemple dans une montre des touches tactiles pour la commande d'une fonction électronique de cette montre par des moyens de commande utilisant les principes de la propagation et de la réflexion de la lumière. De tels moyens de commande font appel à des composants discrets peu coûteux, faibles consommateurs d'énergie et pratiquement invisibles à l'oeil nu. Ils constituent ainsi une alternative intéressante aux touches tactiles dont la structuration sur la face intérieure d'une glace de montre est complexe et donc coûteuse et qui présentent également l'inconvénient de ne pas fonctionner dans toutes les circonstances, en particulier dans l'eau.

La présente invention va être décrite en liaison avec un objet portable du type pièce d'horlogerie. Il va de soi que cet exemple est donné à titre purement illustratif seulement et que l'invention peut s'appliquer à d'autres objets portables tels qu'en particulier un téléphone portable.

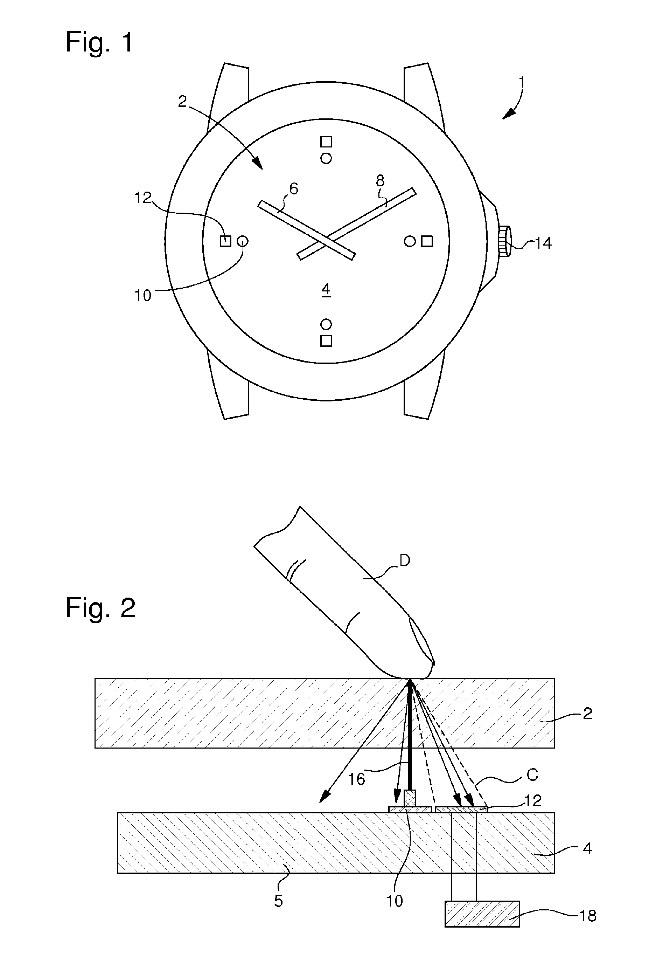

Désignée dans son ensemble par la référence numérique générale 1, une pièce d'horlogerie conforme à la présente invention est représentée schématiquement en vue de dessus à la figure 1. Cette pièce d'horlogerie 1 qui peut être du type montre-bracelet comprend essentiellement une glace 2 disposée au-dessus d'un cadran 4 et entre lesquels se déplacent une aiguille des heures 6 et une aiguille des minutes 8. Les moyens de commande selon l'invention sont constitués par au moins une paire source lumineuse 1 0/détecteur de lumière 12.

Dans l'exemple représenté à la figure 1, les moyens de commande selon l'invention comprennent quatre paires source lumineuse 10/détecteur de lumière 12 qui sont respectivement placées à midi, 3 heures, 6 heures et 9 heures et qui permettent chacune de commander une fonction électronique horaire ou toute autre fonction électronique non liée au temps. Dans la position illustrée à la figure 1, les aiguilles d'heures 6 et de minutes 8 marquent 10h10. Les aiguilles 6, 8 viennent dans cette position lorsque l'utilisateur a actionné les moyens d'enclenchement des sources lumineuses 10 tels qu'un bouton-poussoir 14. En effet, dans cette position, les aiguilles 6, 8 ne recouvrent aucun des paires source lumineuse 10/détecteur de lumière 12 et ne peuvent donc pas gêner leur bon fonctionnement. On notera qu'avantageusement, les sources lumineuses 10 ne commencent à émettre de la lumière qu'après que l'utilisateur ait activé les moyens d'enclenchement 14, ce qui permet de réaliser de substantielles économies d'énergie durant les périodes où l'utilisateur n'a pas besoin d'accéder aux fonctions de commande de la montre 1 et où les sources lumineuses 10 sont éteintes. Ceci est particulièrement avantageux dans la mesure où les réserves en énergie d'une montre-bracelet sont nécessairement limitées et permet d'éviter qu'une fonction de commande ne soit activée par inadvertance.

Comme cela est visible sur la figure 1 et mieux encore sur la figure 2, une source lumineuse 10 et son détecteur de lumière 12 associés sont montés côte-à-côte sur la surface S du cadran 4. Dans l'exemple représenté, ces deux éléments 10, 12 sont montés directement sur la surface S du cadran. Selon une variante non représentée, on pourrait également envisager de monter chaque paire source lumineuse 10/détecteur de lumière 12 sur une plaquette de circuit imprimé de façon à constituer un module que l'on viendrait ensuite fixer sur la surface S du cadran 4. Le montage par paires des sources lumineuses et des détecteurs de lumière sur des plaquettes de circuit imprimé permet de simplifier le montage dans la mesure où l'on fixe sur le cadran 4 des modules complets plutôt que des éléments dissociés. Selon encore une autre variante, il serait également possible de pratiquer dans le cadran 4 des ouvertures dans lesquelles seraient ensuite insérées une source lumineuse 12 et son détecteur de lumière 10 associé.

La source lumineuse 12 peut être une simple diode électroluminescente. Néanmoins, on utilisera préférentiellement une microcavité laser verticale, mieux connue sous son acronyme anglo-saxon VCSEL, telles que celles commercialisées par la société Avalon Photonics Ltd. En effet, une telle microcavité laser émet de la lumière collimatée verticalement vers le haut, c'est-à-dire perpendiculairement à la surface S du cadran 4 en direction de la glace 2, en formant sur la glace une tache de dimension réduite qui permet de bien définir l'endroit de ladite glace où l'utilisateur devra poser son doigt. A titre d'exemple, la divergence du faisceau laser produit par la microcavité peut être de 24° ce qui signifie que, si la glace est disposée 5 mm au-dessus de ladite microcavité, la tache de lumière à sa surface aura un diamètre de seulement 2 mm. Il n'y a donc aucun risque pour que la lumière produite par une microcavité laser vienne perturber le détecteur de lumière associé à une autre microcavité. La longueur d'onde de la lumière produite se trouve dans le domaine de l'infrarouge, autrement dit invisible pour l'oeil humain, et la puissance lumineuse est préférentiellement inférieure ou égale à 1 mW. La valeur de la puissance optique mise en jeu dans le cadre de la présente invention est donc suffisamment faible pour ne présenter aucun danger pour la vision de l'utilisateur. Une microcavité laser de type VCSEL est de dimension beaucoup plus faible qu'une diode laser. A titre d'exemple, la surface occupée par une microcavité laser et son capteur de lumière associé est de l'ordre de 200 µm², ce qui rend un tel ensemble pratiquement imperceptible et ne nuit pas à l'esthétique du cadran de la montre. Il peut ainsi être envisagé de dissimuler l'ensemble constitué par la source lumineuse et son photodétecteur au milieu des lettres reportées sur le cadran pour indiquer le nom de la fonction associée à cet ensemble.

Le capteur de lumière 10 est préférentiellement une photodiode qui se caractérise par un cône d'acceptation C dont la géométrie définit les conditions aux limites entre la lumière qui va tomber dans ce cône et être transformée en un courant par la photodiode, et la lumière qui passe hors des limites dudit cône et qui ne sera donc pas utile pour ladite photodiode. Les dimensions de la photodiode qui déterminent l'ouverture du cône d'acceptation et l'espacement entre cette photodiode et la microcavité laser peuvent être choisis de telle sorte que la réponse du système soit optimale quand le doigt D de l'utilisateur se trouve juste en contact avec la glace 2.

Le principe de fonctionnement du système selon l'invention est le suivant. Après que l'utilisateur ait appuyé sur le bouton-poussoir 14, la microcavité laser 12 émet un faisceau de lumière infrarouge 16 verticalement vers le haut. Si aucun obstacle n'intercepte le faisceau lumineux 16, la lumière est libre de poursuivre son chemin au-delà de la glace 2 et la photodiode 12 ne produit aucun signal. Si, au contraire, l'utilisateur applique son doigt D sur la glace 2 dans la zone éclairée par le faisceau de lumière infrarouge 16, une partie de la lumière interceptée par le doigt D de l'utilisateur est diffusée et réfléchie en arrière vers le cadran 4. La fraction de lumière qui tombe dans le cône d'acceptation C de la photodiode 10 va être transformée par ladite photodiode 10 en un signal de courant qui va être appliqué à un circuit électronique de commande 18 qui utilisera ce signal électrique pour l'activation de la fonction horaire ou non liée au temps correspondantes.

Il va de soi que la présente invention n'est pas limitée au mode de réalisation qui vient d'être décrit et que diverses modifications et variantes simples peuvent être envisagées par l'homme du métier sans sortir du cadre de l'invention tel que défini par les revendications associées. En particulier, il peut être envisagé d'appliquer la présente invention à un objet portable du type téléphone portable.

## Revendications

1. Objet portable tel qu'une pièce d'horlogerie comprenant un cadran (4) recouvert par une glace de montre (2), cette pièce d'horlogerie (1) renfermant un circuit électronique (16) de commande d'au moins une fonction horlogère ou d'une fonction non liée au temps, l'objet portable étant **caractérisé en ce qu'**il comprend en outre au moins une source lumineuse (12) et un détecteur de lumière associé (10) qui sont disposés au niveau du cadran (4), la source lumineuse (12) émettant à travers la glace (2) un faisceau de lumière qui est, au moins partiellement, réfléchi vers le détecteur de lumière (10) lorsqu'il est intercepté par un doigt (D) de l'utilisateur posé sur la glace (2) dudit objet portable, le détecteur de lumière (10) fournissant au circuit électronique de commande (16) un signal électrique pour l'activation de la fonction correspondante lorsqu'il détecte la lumière produite par la source lumineuse (12) et réfléchie par le doigt (D) de l'utilisateur.

2. Objet portable selon la revendication 1, **caractérisé en ce qu'**il comprend des moyens d'enclenchement (16) que l'utilisateur doit activer pour que la source lumineuse (12) émette de la lumière.

3. Objet portable selon la revendication 2, **caractérisé en ce que** les moyens d'enclenchement (16) sont constituées par un bouton-poussoir.

4. Objet portable selon l'une quelconque des revendications 1 à 3, **caractérisé en ce qu'**il comprend autant de paires source lumineuse (12)/détecteur de lumière (10) qu'il y a de fonctions à commander dans ledit objet portable.

5. Objet portable selon l'une quelconque des revendications 1 à 4, **caractérisé en ce qu'**il comprend une aiguille des heures (6) et une aiguille des minutes (8) qui se déplacent au-dessus du cadran (4) et qui se mettent dans une position telle qu'elles ne recouvrent pas la ou les paires source lumineuse (12)/détecteur de lumière (10) lorsque la source lumineuse (12) est activée.

6. Objet portable selon l'une quelconque des revendications 1 à 5, **caractérisé en ce que** la source lumineuse (12) est une microcavité laser verticale qui émet de la lumière collimatée dont la longueur d'onde est située dans le domaine de l'infrarouge.

7. Objet portable selon la revendication 6, **caractérisé en ce que** la puissance lumineuse produite par la microcavité laser est inférieure ou égale à 1 mW.

8. Objet portable selon l'une quelconque des revendications 6 ou 7, **caractérisé en ce que** le détecteur de lumière (10) est une photodiode.

9. Objet portable selon la revendication 8, **caractérisé en ce que** la photodiode et la microcavité laser sont montées côte-à-côte sur le cadran (4) de la pièce d'horlogerie (1).

10. Objet portable selon la revendication 8, **caractérisé en ce que** la photodiode et la microcavité laser sont montées côte-à-côte sur un même circuit imprimé, lui-même fixé sur le cadran (4) ou intégré dans celui-ci.
